# EUROPEAN PATENT APPLICATION

(11) **EP 3 220 341 A1**
(43) Date of publication of application: **20.09.2017**
(21) Application number: 14905696.2
(22) Date of filing: 14.11.2014
(51) Int. Cl.: G06Q 50/14, G06Q 10/02, G06Q 10/06

(54) **ITINERARY DISPLAY PROGRAM, ITINERARY DISPLAY METHOD AND ITINERARY DISPLAY DEVICE**

(71) Applicant: Fujitsu Limited, Kawasaki-shi, Kanagawa 211-8588 (JP)
(72) Inventor: MAITA, Tsuyoshi, Kanagawa 211-8588 (JP); NORO, Nobumi, Kanagawa 211-8588 (JP); KUJI, Yasunori, Aomori-shi Aomori 030-0823 (JP)
(74) Representative: Hoffmann Eitle
(86) International application number: PCT/JP2014/080276
(87) International publication number: WO 2016/075837

(57) **Abstract**

An itinerary display device receives selection of a plurality of sightseeing spots via, for example, a web page displayed on a user terminal, and displays a list of the sightseeing spots together with images corresponding to the respective sightseeing spots. The itinerary determining device then allows one, some, or all of the sightseeing spots displayed in the list to be arranged at any position or positions within a time schedule field representing one day or a plurality of days. Thereafter, the itinerary determining device displays, in correspondence with the arranged sightseeing spot, a clock time that corresponds to the position at which the sightseeing spot has been arranged.

## Description

### [Technical Field]

The present invention relates to an itinerary display program, an itinerary display method, and an itinerary display device.

### [Background Art]

Conventionally, the most popular way to take when a travel is planned has been to go to a travel agency, have a consultation with staff thereof over the counter, and decide a travel plan. In recent years, people have started to use web services provided by travel agencies and the like to select their travel plans.

For example, a user uses a terminal such as a mobile phone or a personal computer to access a web page of a travel system provided by a company such as a travel agency. The user then uses the terminal to input information to the accessed web page, the information including times and dates of travel, the length of travel in days, the number of travelers, destinations, modes of transport, and the upper limit on prices.

Based on the input information, the travel system then selects the optimum travel package from among travel packages offered by the company, and displays the selected travel package on a web page that the user accesses. In this manner, a travel agency provides a travel package, selected from among travel packages thereof, that fits with a travel plan expected by the user.

### [Citation List]

### [Patent Literature]

Patent Literature 1: Japanese Laid-open Patent Publication No. 2011-047925
Patent Literature 2: Japanese Laid-open Patent Publication No. 2004-294222
Patent Literature 3: Japanese Laid-open Patent Publication No. 09-212563
Patent Literature 4: Japanese Laid-open Patent Publication No. 2001-165680

### [Summary of invention]

### [Technical Problem]

Even with the use of the above technique, however, it is still difficult to provide a travel plan that matches expectations of a user. For example, a travel agency selects and provides a travel package from among travel packages that are offered by the travel agency, and therefore may fail to provide a travel package that fits with a travel plan of a user. When a user generates a plan by himself or herself, the user needs to calculate the lengths of stay at sightseeing spots and the like with travel times and expenses taken into consideration. The generation of a travel plan expected by the user thus takes trouble and time and is not easy.

In one aspect, the present invention is aimed at providing an itinerary display program, an itinerary display method, and an itinerary display device that make it possible to provide a travel plan that matches expectations of a user.

### [Solution to Problem]

According to an aspect of an embodiment, a non-transitory computer-readable recording medium stores therein an itinerary display program that causes a computer to execute a process. The process includes: displaying a list of a plurality of selected sightseeing spots together with images corresponding to the respective sightseeing spots; allowing one, some, or all of the sightseeing spots displayed in the list to be arranged at any position or positions within a time schedule field representing one day or a plurality of days; and displaying, in correspondence with the arranged sightseeing spot, a clock time that corresponds to the position to which the sightseeing spot has been arranged.

### [Advantageous Effects of Invention]

An embodiment makes it possible to provide a travel plan expected by a user.

### [Brief Description of Drawings]

FIG. 1 is a diagram illustrating an example of the entire configuration of a system according to a first embodiment.
FIG. 2 is a block diagram illustrating the functional configuration of an itinerary determining device according to the first embodiment.
FIG. 3 is a diagram illustrating an example of information stored in a sightseeing spot database (DB).
FIG. 4 is a diagram illustrating an example of a travel plan planning page.
FIG. 5 is a diagram illustrating an example of setting sightseeing spots.
FIG. 6 is a diagram illustrating an example of an alert displayed when a sightseeing spot is set.
FIG. 7 is a diagram illustrating an example of changing the time lengths of stay at sightseeing spots.
FIG. 8 is a diagram illustrating an example of setting a route to be traveled.
FIG. 9 is a diagram explaining arrangement of details of a travel tour.
FIG. 10 is a diagram illustrating an example of changing how a travel schedule is displayed.
FIG. 11 is a diagram illustrating an example of how detailed information is displayed when a travel schedule is displayed along the horizontal axis.
FIG. 12 is a flowchart illustrating the procedure of travel schedule generation processing.
FIG. 13 is a diagram illustrating an example of the hardware configuration.

### [Description of Embodiments]

The following describes embodiments of an itinerary display program, an itinerary display method, and an itinerary display device according to the present invention in detail based on the drawings. These embodiments are not intended to limit the present invention. The embodiments can be combined as appropriate to the extent that there is no conflict.

### [a] First Embodiment

### [Overall Configuration]

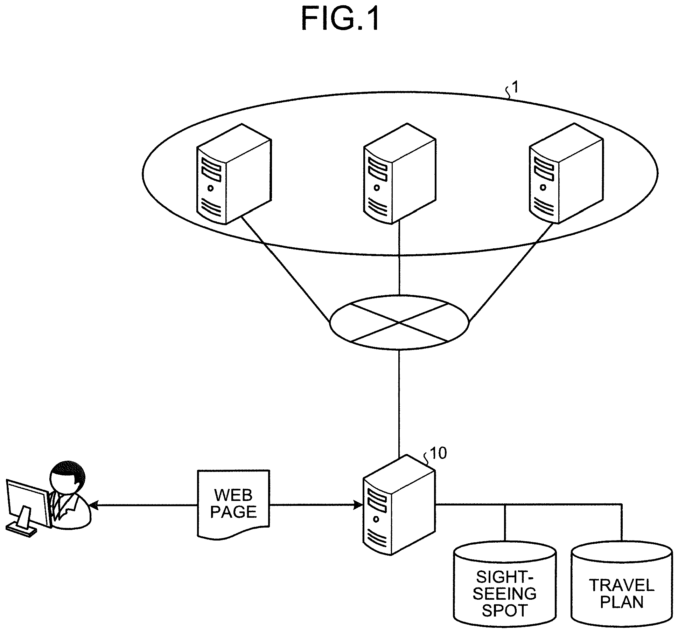

FIG. 1 is a diagram illustrating an example of the entire configuration of a system according to a first embodiment. As illustrated in FIG. 1, this system includes a server group 1 of various servers and an itinerary determining device 10, which are connected to each other through a network such as the Internet so as to be able to communicate with each other. The itinerary determining device 10 is an example of an itinerary display device.

The server group 1 includes various servers such as a location specification server and a route finding server. For example, a location specification server is a server that specifies location information (longitude and latitude) from the name of a facility, a station, or the like. A route finding server is a server that computes route information from a departure location to a final destination by having location information or the names of facilities input for the departure location and the final destination.

For example, the route finding server uses location information of a departure location and a final destination specified by the location specification server to compute route information from the departure location to the final destination and times needed for traveling the respective routes. Here, the route finding server computes route information and times needed for traveling a relevant route for different modes of travel such as trains, airplanes, foot, and cars.

The itinerary determining device 10 retains information, collected by crawling web pages of different travel agencies, on travel packages indicating travel plans that are offered to users. The itinerary determining device 10 also retains information on sightseeing spots previously collected by region.

Under these conditions, the itinerary determining device 10 displays a list of a plurality of selected sightseeing spots together with images corresponding to the respective sightseeing spots. The itinerary determining device 10 then allows one, some, or all of the sightseeing spots displayed in the list to be arranged at any position or positions within a time schedule field representing one day or a plurality of days. Thereafter, the itinerary determining device 10 displays, in correspondence with the arranged sightseeing spot, a clock time that corresponds to the position at which the sightseeing spot has been arranged.

For example, the itinerary determining device 10 displays, on a user terminal, a web page configured so that an itinerary may be editable. The itinerary determining device 10 then displays, on the web page, symbols to which information on sightseeing spots specified by a user has been assigned, while leaving the symbols editable. Thereafter, the itinerary determining device 10 dynamically changes time settings, a length of stay, and the like in response to operation to, for example, move or enlarge the symbol for the corresponding sightseeing spot.

Consequently, the itinerary determining device 10 arranges one, some, or all of the sightseeing spots selected by a user in a time schedule field corresponding to scheduled travel dates, and displays, in correspondence with the arranged sightseeing spot, a clock time that corresponds to a position at which the sightseeing spot has been arranged. The itinerary determining device 10 is thus capable of offering a travel plan that matches expectation of the user.

### [Functional Configuration]

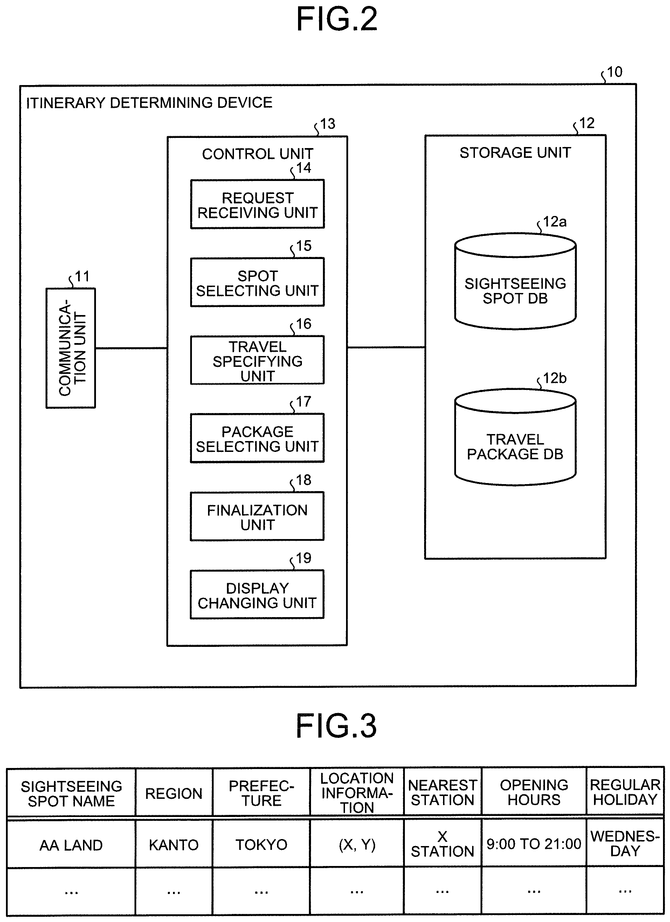

FIG. 2 is a block diagram illustrating the functional configuration of the itinerary determining device according to the first embodiment. As illustrated in FIG. 2, the itinerary determining device 10 includes a communication unit 11, a storage unit 12, and a control unit 13.

The communication unit 11 is a processing unit operable to control communication of another device and is, for example, a network interface card. For example, the communication unit 11 transmits data to and receives data from each server included in the server group 1 and executes communication with a user terminal via a web browser.

The storage unit 12 is a storage device operable to store therein computer programs to be executed by the control unit 13, a sightseeing spot database (DB) 12a, and a travel package DB 12b and is, for example, a memory or a hard disk.

The sightseeing spot DB 12a is a database operable to store therein information on sightseeing spots with respect to each region, and settings therein are changeable by an administrator or the like for example. FIG. 3 is a diagram illustrating an example of information stored in the sightseeing spot DB. As illustrated in FIG. 3, the sightseeing spot DB 12a stores therein information such as "Sightseeing Spot Name, Region, Prefecture, Location Information, Nearest Station, Opening Hours, and Regular Holiday" while associating these pieces of information with one another. Information to be stored therein may be differently set up as desired.

"Sightseeing Spot Name" represents the names of sightseeing spots and may include a popular or abbreviated name. "Region" represents information that specifies regions in which the respective sightseeing spots are located and, for example, has entries such as Kanto, North Kanto, and Shikoku. "Prefecture" represents information that specifies addresses of the respective sightseeing spots and, for example, has entries such as Tokyo and Osaka. "Location Information" represents information that specifies locations of the respective sightseeing spots and, for example, has latitudes and longitudes. "Nearest Station" represents information that specifies train stations located nearest to the respective sightseeing spots. "Opening Hours" represents hours during which the sightseeing spots are open, and "Regular Holiday" represents regular holidays of the sightseeing spots.

The example of FIG. 3 indicates that AA Land is located in Tokyo in Kanto and that the location information and the nearest station thereof are (X,Y) and X Station, respectively. The example further indicates that the opening hours of AA Land is from 9:00 to 21:00 and that the regular holiday thereof is Wednesday.

The travel package DB 12b is a database operable to store therein package information on travel packages collected from different travel agencies. Examples of the information on travel packages stored here include information on travel packages retrievable via a web browser or the like. This information on travel packages is information having been already determined by the travel agencies, and includes information on: dates of travels; departure locations; final destinations; expenses; tour conductors; primary modes of transport; transport modes; names, locations, and entrance fees of sightseeing spots to visit; names, locations, and entrance fees of eateries to visit; available periods of the respective travel packages; and meal charges.

The control unit 13 is a processing unit operable to control the entire processing in the itinerary determining device 10 and is formed of, for example, a processor. This control unit 13 includes a request receiving unit 14, a spot selecting unit 15, a travel specifying unit 16, a package selecting unit 17, a finalization unit 18, and a display changing unit 19. The request receiving unit 14, the spot selecting unit 15, the travel specifying unit 16, the package selecting unit 17, the finalization unit 18, and the display changing unit 19 are examples of processes each to be executed by a part of an electronic circuit or by a processor. The request receiving unit 14 is an example of a display control unit; and the spot selecting unit 15, the travel specifying unit 16, and the package selecting unit 17 constitute examples of an arrangement unit and a correspondence display unit.

The request receiving unit 14 is a processing unit operable to reply to the user terminal with a travel plan planning page upon receiving a request for generation of an itinerary, which is a travel schedule, from the user terminal. Specifically, upon receiving information such as a departure location, a final destination, dates of travel, and sightseeing spots via the web browser or the like, the request receiving unit 14 replies to the user terminal with a travel plan planning page on which the received sightseeing spots are displayed at the same time as a travel package corresponding to the sightseeing spots and the final destination is displayed.

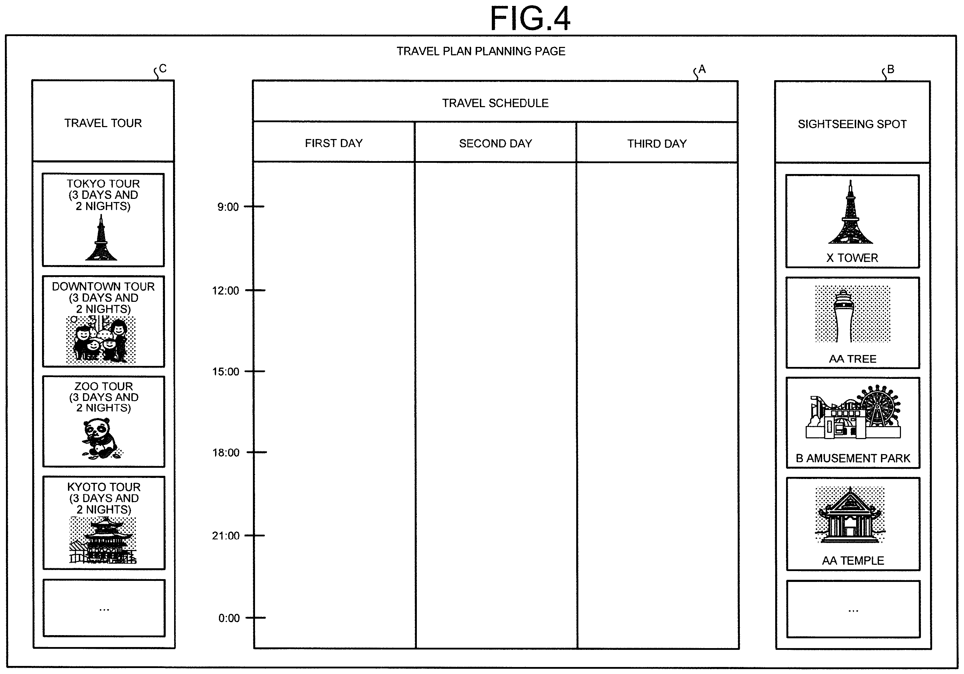

FIG. 4 is a diagram illustrating an example of a travel plan planning page. The request receiving unit 14 replies to the user terminal with the web page illustrated in FIG. 4. An area A in a screen of FIG. 4 is an area with which a travel schedule is planned. The details of the area A is described later. The area A has a temporal axis extending downward from the upper side of the screen, and time intervals to be displayed thereon can be set as desired. That is, each time interval to be displayed can be set to one hour or can be set to three hours. The example of FIG. 4 illustrates an example in which a travel schedule of three days is generated with the time interval of the temporal axis set to three hours.

An area B in the screen of FIG. 4 is an area in which symbols to which information on sightseeing spots has been assigned are displayed, and each of the symbols is displayed so as to be selectable and movable. For example, the request receiving unit 14 generates symbols for the sightseeing spots received from the user terminal to display the symbols in the area B, and specifies the regions and the prefectures of the received sightseeing spots from the sightseeing spot DB 12a. The request receiving unit 14 then extracts other sightseeing spots associated with the specified regions and prefectures from the sightseeing spot DB 12a, generates symbols for the extracted sightseeing spots, and displays the symbols in the area B.

The request receiving unit 14 is also capable of displaying, in the area B, symbols for sightseeing spots corresponding to the final destination received from the user terminal. For example, upon receiving Tokyo Station as the final destination, the request receiving unit 14 specifies sightseeing spots having Kanto entered as the region thereof or having Tokyo entered as the prefecture thereof, generates symbols for the specified sightseeing spots from the sightseeing spot DB 12a, and displays the symbols in the area B.

The information on the sightseeing spots illustrated in FIG. 3 is assigned to symbols for sightseeing spots displayed in the area B. That is, when an operation such as double-clicking for selecting a symbol for any sightseeing spot is performed on the screen, the request receiving unit 14 can also display information such as the nearest station, opening hours, and a regular holiday illustrated in FIG. 3.

An area C in the screen of FIG. 4 is an area in which symbols are displayed to which information on travel tours has been assigned. Each of the symbols is displayed so as to be selectable and movable. That is, in the area C, symbols are displayed to which information on travel packages, travel tours, and the like offered by different travel agencies has been assigned.

For example, the request receiving unit 14 specifies, from the sightseeing spot DB 12a, the region or the prefecture of each sightseeing spot received from the user terminal. The request receiving unit 14 then extracts, from the travel package DB 12b, travel packages, travel tours, and the like that have been associated with the specified region or prefecture, and generates symbols for the extracted travel packages and travel tours to display the symbols in the area C.

Detailed information on travel packages and the like stored in the travel package DB 12b is assigned also to respective symbols for sightseeing spots displayed in the area C. That is, when an operation such as double-clicking for selecting a symbol for any sightseeing spot is performed on the screen, the request receiving unit 14 can also display detailed information on a corresponding travel package.

The spot selecting unit 15 is a processing unit operable to arrange a sightseeing spot in the travel schedule. Specifically, when a symbol for a sightseeing spot has been dragged from the area B to the area A, the spot selecting unit 15 arranges the symbol for the sightseeing spot at the position at which it has been dragged. When a symbol for a sightseeing spot is dragged from one position to another within the area B, the spot selecting unit 15 arranges the symbol for the sightseeing spot at a position to which it is dragged. When a symbol for a sightseeing spot is dragged from the area A to the area B or to the outside of the area A, the spot selecting unit 15 arranges the symbol for the sightseeing in the area B.

When the symbol for the sightseeing spot is arranged in the area A, the spot selecting unit 15 sets a length of stay corresponding to the size of the symbol. That is, the spot selecting unit 15 is capable of automatically setting the beginning clock time of stay and the ending clock time of stay at the sightseeing spot in accordance with the position at which the symbol for the sightseeing spot is arranged.

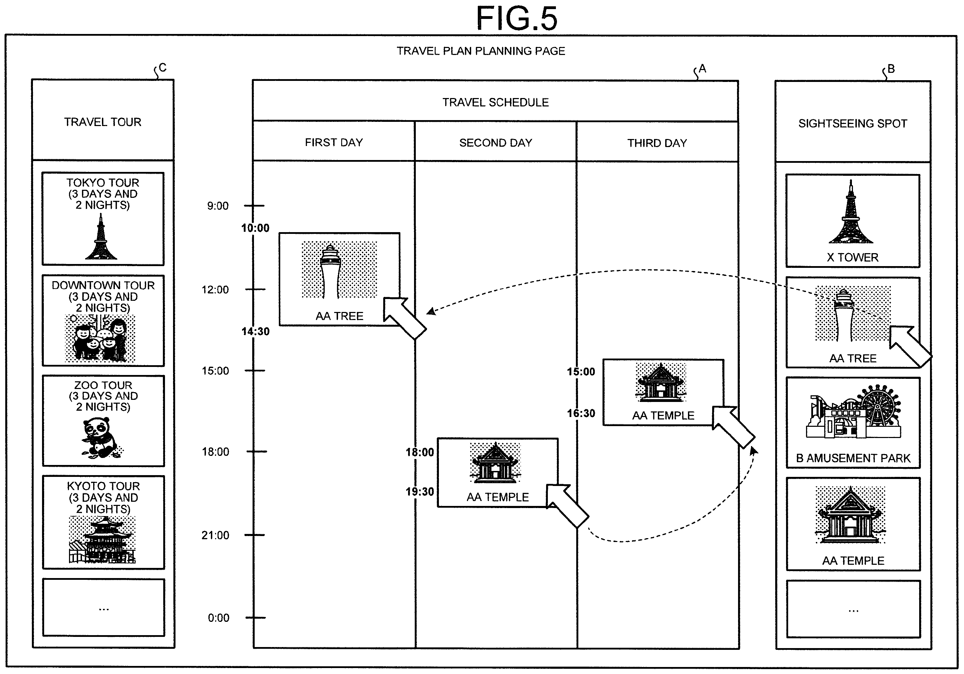

Specific description is given using FIG. 5. FIG. 5 is a diagram illustrating an example of setting sightseeing spots. As illustrated in FIG. 5, when a symbol for AA Tree in the area B has been dragged into an area of the first day in the area A, the spot selecting unit 15 specifies, with reference to the temporal axis, the position at which the symbol has been dragged as spanning a time slot from 10:00 to 14:30. In this case, the spot selecting unit 15 sets the beginning clock time of stay to 10:00 and sets the ending clock time of stay to 14:30 for the symbol for AA Tree. That is, the spot selecting unit 15 sets, as a schedule, information that the user stays at AA Tree for four and a half hours from 10:00 to 14:30.

As illustrated in FIG. 5, when a symbol for AA Temple set in the second day has been dragged into the third day in the area A, the spot selecting unit 15 specifies, with reference to the temporal axis, the position at which the symbol has been dragged as spanning a time slot from 15:00 to 16:30. In this case, the spot selecting unit 15 sets the beginning clock time of stay to 15:00 and sets the ending clock time of stay to 16:30 for the symbol for AA Temple. That is, the spot selecting unit 15 sets, as a schedule, information that the user stays at AA Temple for an hour and a half from 15:00 to 16:30.

The spot selecting unit 15 is further capable of, when a symbol for a sightseeing spot is arranged at a position that does not correspond to the opening hours of the sightseeing spot or corresponds to the regular holiday thereof, performing control so as to display an alert or rejecting the arrangement.

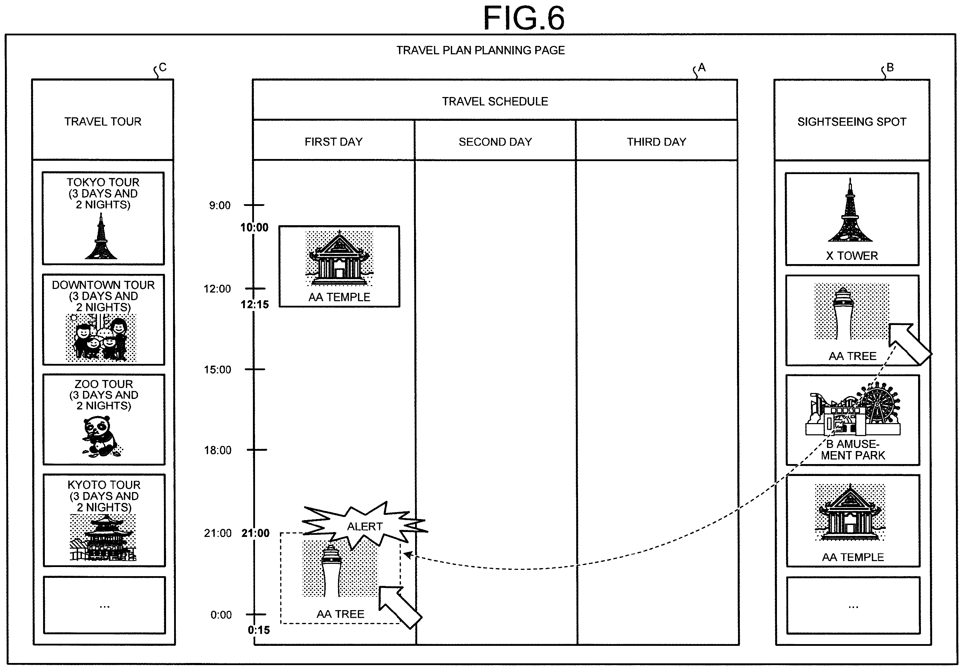

FIG. 6 is a diagram illustrating an example of an alert displayed when a sightseeing spot is set. As illustrated in FIG. 6, when the symbol for AA Tree in the area B has been dragged into the area of the first day in the area A, the spot selecting unit 15 specifies, with reference to the temporal axis, the position at which the symbol has been dragged as spanning a time slot from 21:00 to 0:15. The spot selecting unit 15 also specifies, with reference to the sightseeing spot DB 12a, the opening hours of AA Tree as ending at 21:00. The spot selecting unit 15 then displays an alert because the position to which the symbol has been dragged corresponds to the non-opening hours.

The spot selecting unit 15 is also capable of automatically correcting the position of the symbol for AA Tree when only the ending time of the symbol for AA Tree that has been dragged is outside of the opening hours. For example, the spot selecting unit 15 is also capable of automatically rearranging the position of the symbol for AA Tree to span a time slot from 17:00 to 21:00 when the position of the symbol spans a time slot from 18:00 to 22:00 with an unoccupied time slot available immediately before the position at which the symbol has been arranged. That is, the spot selecting unit 15 changes the beginning clock time of stay and the ending clock time of stay at a sightseeing spot by rearranging the position of the symbol so that the ending clock time of stay may be included in the opening hours thereof. The spot selecting unit 15 is also capable of automatically correcting the position of the symbol for AA Tree when only the beginning time of the symbol for AA Tree that has been dragged is outside of the opening hours.

The spot selecting unit 15 is capable of changing a length of stay at a sightseeing spot in response to size enlargement or reduction of a symbol therefor. specifically, the spot selecting unit 15 extends the length of stay by enlarging the symbol and shortens the length of stay by reducing the symbol.

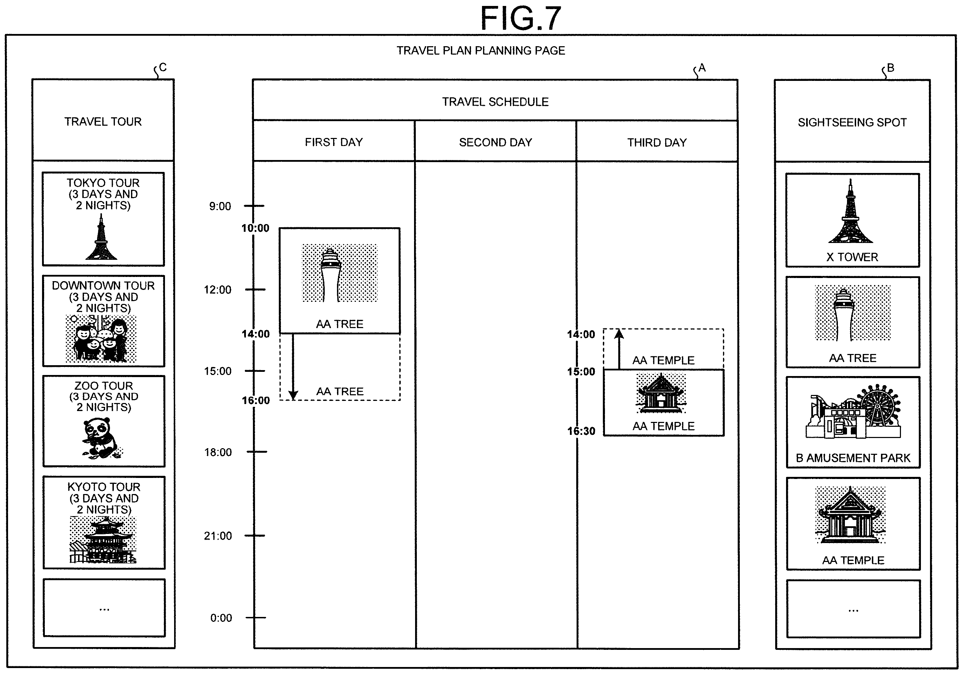

FIG. 7 is a diagram illustrating an example of changing the time lengths of stay at sightseeing spots. As illustrated in FIG. 7, upon receiving an enlargement operation that changes the ending clock time of stay performed on the symbol for AA Tree arranged from 10:00 to 14:00 on the first day, the spot selecting unit 15 enlarges the size of the symbol to a position corresponding to 16:00. Consequently, the spot selecting unit 15 changes the schedule in such a manner as to extend the length of stay two hours.

Likewise, upon receiving an enlargement operation that advances the beginning clock time of stay performed on the symbol for AA Temple arranged from 15:00 to 16:30 on the third day, the spot selecting unit 15 enlarges the size of the symbol so that the stay may begin at 14:00. Consequently, the spot selecting unit 15 changes the schedule in such a manner as to extend the length of stay at AA Temple by an hour.

While examples of enlargement are described here, the embodiment is not limited to enlargement. Reduction operations can also be processed. For example, upon receiving a reduction operation that changes the ending clock time of stay performed on the symbol for AA Tree arranged from 10:00 to 14:00 on the first day, the spot selecting unit 15 reduces the size of the symbol to a position corresponding to 13:00. Consequently, the spot selecting unit 15 changes the schedule in such a manner as to cut the length of stay short by an hour.

The spot selecting unit 15 is capable of automatically cutting the length of stay short in response to an alert issued when a symbol is being arranged. For example, the spot selecting unit 15 is also capable of, when the symbol for AA Tree spans a time slot from the beginning clock time of stay 18:00 to the ending clock time of stay 22:00 outside of the opening hours thereof, automatically changing the size of the symbol so that the ending clock time of stay may be 21:00 within the opening hours. That is, the spot selecting unit 15 automatically changes the size of the symbol so that the length of stay at AA Tree may fit into the opening hours.

Referring back to FIG. 2, the travel specifying unit 16 is a processing unit operable to compute a mode of travel and a travel time between sightseeing spots when symbols for the sightseeing spots are arranged continuously. Specifically, when a second sightseeing spot is arranged as a destination to visit next to a first sightseeing spot after the first sightseeing spot is arranged, the travel specifying unit 16 displays, between symbols for the first sightseeing spot and the second sightseeing spot, information indicating a mode of travel or a travel time for traveling from the first sightseeing spot to the second sightseeing spot.

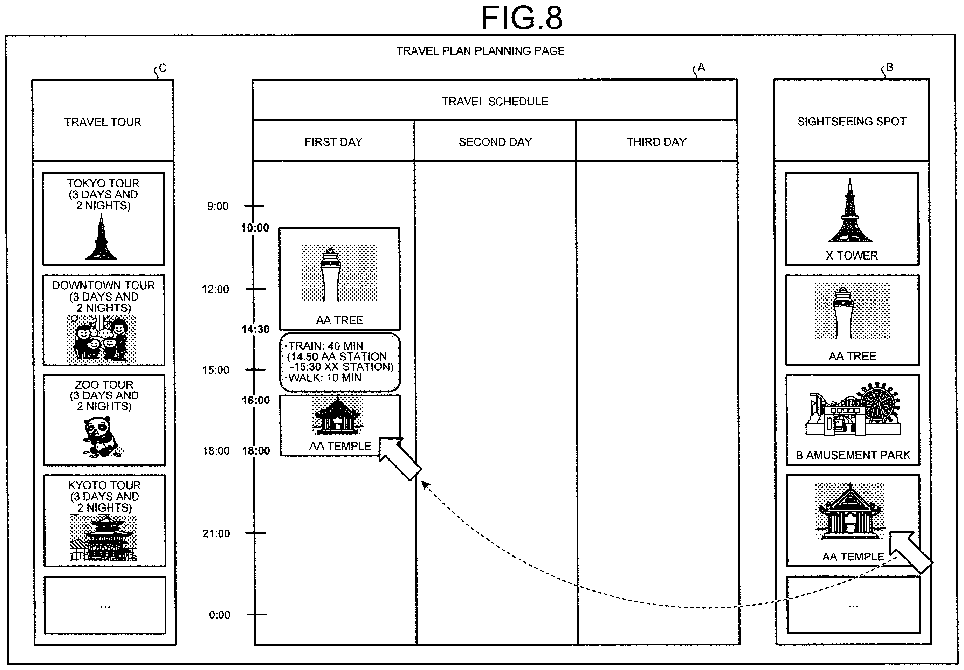

A specific example is described using FIG. 8. FIG. 8 is a diagram illustrating an example of setting directions for travel. As illustrated in FIG. 8, the travel specifying unit 16 detects that, with AA Tree already set from 10:00 to 14:30 on the first day, the symbol for AA Temple is arranged at a position corresponding to a time slot from the beginning clock time of stay at 16:00 to the ending clock time of stay at 18:00.

In this case, the travel specifying unit 16 acquires the nearest station and the location information of AA Tree and the nearest station and the location information of AA Temple from the sightseeing spot DB 12a. The travel specifying unit 16 then transmits these acquired pieces of information to the route finding server, and acquires "Train: 40 minutes (14:50 AA Station - 15:30 XX Station), Walk: 10 minutes" as a mode of travel or a travel time for traveling from AA Tree to AA Temple. The travel specifying unit 16 then displays "Train: 40 minutes (14:40 AA Station - 15:30 XX Station), Walk: 10 minutes" acquired, between the symbols for AA Tree and AA Temple.

The travel specifying unit 16 is capable of selecting information acquired from the route finding server as appropriate and displaying the information. The travel specifying unit 16 is also capable of displaying indications of traveling by train and of walking in different colors so as to make them visually distinguishable from each other. In the same manner as the spot selecting unit 15, the travel specifying unit 16 is further capable of executing enlargement or reduction of or rearrangement of a symbol when it is impossible to arrive at a sightseeing spot arranged next (corresponds to AA Temple in FIG. 8) at the beginning clock time of stay thereat. For example, the travel specifying unit 16 can execute enlargement or reduction of or rearrangement of a symbol (AA Tree in FIG. 8) for a sightseeing spot to visit first and/or a sightseeing spot to visit next to execute change of settings so as to enable the sightseeing spots to be visited within the opening hours thereof.

When a symbol for a sightseeing spot is deleted, the travel specifying unit 16 hides display of corresponding information such as a mode of travel. In the example of FIG. 8, when the symbol for AA Tree scheduled to be visited before AA Temple is deleted, the travel specifying unit 16 deletes the mode of travel or the like displayed between the symbols for AA Tree and AA Temple.

Referring back to FIG. 2, the package selecting unit 17 is a processing unit operable to arrange contents of a travel tour or a travel package in the travel schedule. Specifically, when a symbol for a travel tour is dragged from the area C into the area A, the package selecting unit 17 displays detailed contents of the travel tour in the travel schedule. That is, the package selecting unit 17 executes automatic arrangement of symbols for accommodations and sightseeing spots contained in the travel tour and display of information such as modes of travel.

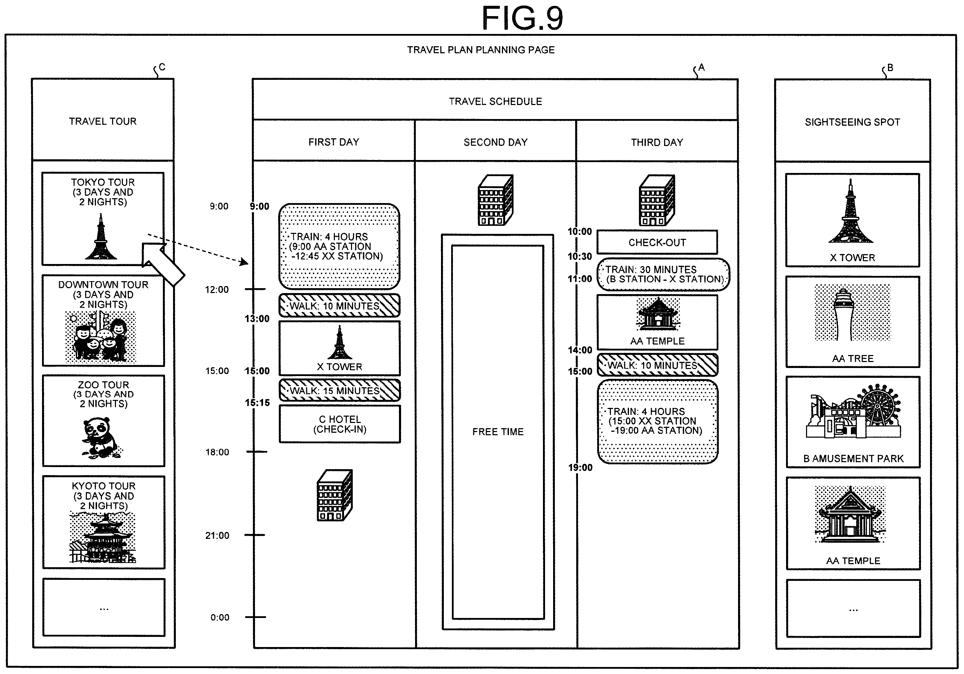

FIG. 9 is a diagram explaining arrangement of details of a travel tour. As illustrated in FIG. 9, in response to dragging of symbol for a Tokyo tour in the area C into the area A, the package selecting unit 17 reflects the details of the Tokyo tour in the travel schedule. Specifically, the package selecting unit 17 displays, as a schedule for the first day, a schedule that goes as follows: boarding a train that departs from AA Station at 9:00; arriving at XX Station at 12:45; then walking for 10 minutes; and arriving at X Tower at 13:00. The package selecting unit 17 further displays a schedule that goes as follows: departing from X Tower at 15:00; walking for 15 minutes; and checking in at C Hotel at 15:15.

Regarding the second day, the package selecting unit 17 displays a schedule left to free time. Regarding the third day, the package selecting unit 17 displays a schedule that goes as follows: checking out of C Hotel at 10:00; then traveling by train for 30 minutes from B Station to X Station; and arriving at AA Temple at 11:00. The package selecting unit 17 further displays a schedule that goes as follows: departing from AA Temple at 14:00; walking for 10 minutes; boarding a train that departs from XX Station at 15:00 and arriving at AA Station at 19:00.

The spot selecting unit 15 or the travel specifying unit 16 can execute processing such as move, enlargement, reduction and rearrangement on each symbol displayed by the package selecting unit 17. That is, the user can generate contents according to his or her preference based on the contents of a travel tour.

Referring back to FIG. 2, the finalization unit 18 is a processing unit operable to finalize the travel schedule. Specifically, upon receiving a finalization operation such as pressing of a finalization button within the travel plan planning page, the finalization unit 18 finalizes an itinerary set in the travel schedule on the travel plan planning page. The finalization unit 18 then prints out the finalized travel schedule and/or transmits it to a travel agency.

The display changing unit 19 is a processing unit operable to change the orientation of display of the travel plan planning page. Specifically, the display changing unit 19 changes how the travel schedule is displayed, by changing a setting of the temporal axis of the time schedule of the travel schedule between the vertical orientation and the horizontal orientation.

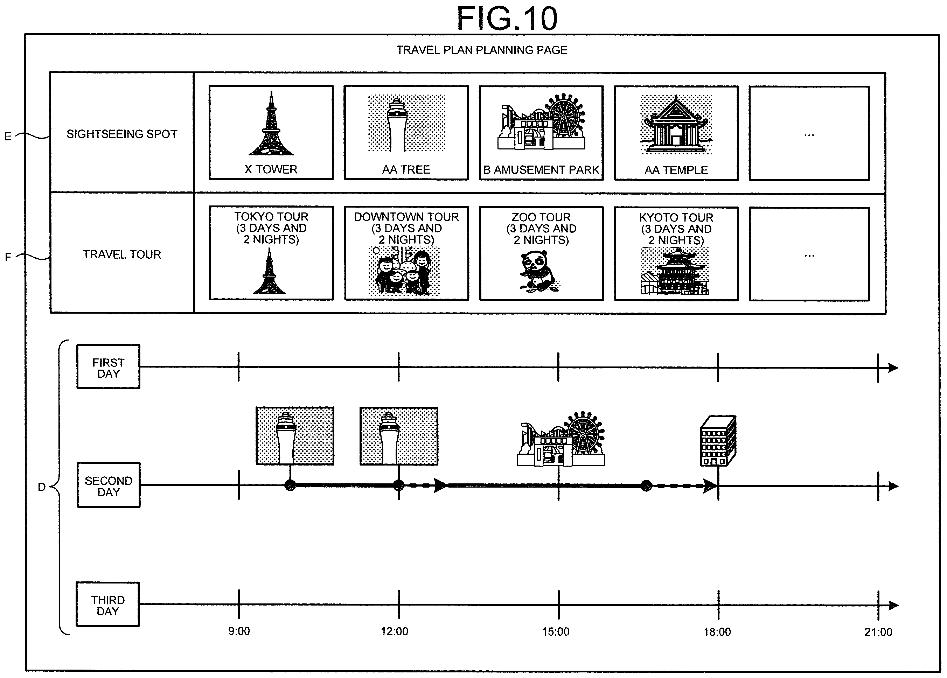

FIG. 10 is a diagram illustrating an example of changing how the travel schedule is displayed. As illustrated in FIG. 10, upon receiving a display change instruction while being in the state illustrated in FIG. 4, the display changing unit 19 changes the display into a screen having the temporal axis horizontally oriented. An area D in FIG. 10 corresponds to the area A in FIG. 4; an area E in FIG. 10 corresponds to the area B in FIG. 4; and an area F in FIG. 10 corresponds to the area C in FIG. 4.

In the area D in FIG. 10, symbols for sightseeing spots are arranged. The length of stay at a sightseeing spot can be represented with the same symbol therefor displayed both at the beginning clock time of stay and at the ending clock time of stay. Alternatively, the length of stay can be represented with the symbol displayed between the beginning clock time of stay and the ending clock time of stay. As in drawings such as FIG. 8, a mode of travel is displayed between symbols for sightseeing spots. Indications about traveling by train and walking can be distinguished from each other in different colors by being displayed in different forms such as colors.

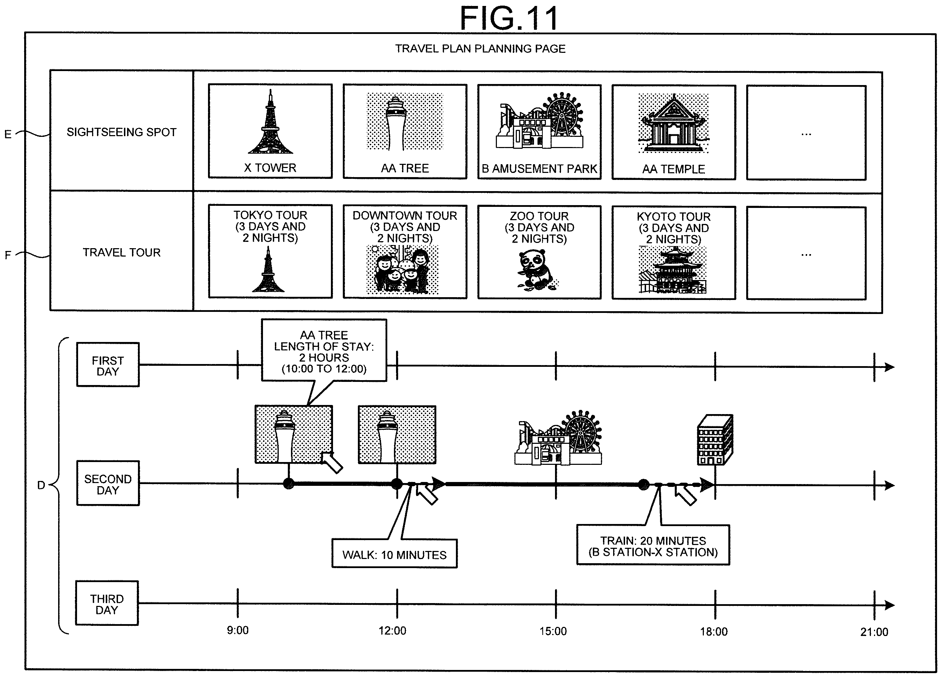

[The user can additionally browse detailed] information by selecting a symbol or a mode of travel. FIG. 11 is a diagram illustrating an example of how detailed information is displayed when a travel schedule is displayed along the horizontal axis. As illustrated in FIG. 11, when the symbol for the AA Tree is selected, the spot selecting unit 15 displays detailed information such as "Length of stay: 2 hours from 10:00 to 12:00" as in the above-described processing. When a mode of travel is selected, the travel specifying unit 16 displays information such as "Walk: 10 minutes" if the selected mode of travel is walking, and displays information such as "By train: 20 minutes (A Station - B Station)" if the selected mode of travel is by train.

### Procedure of Processing

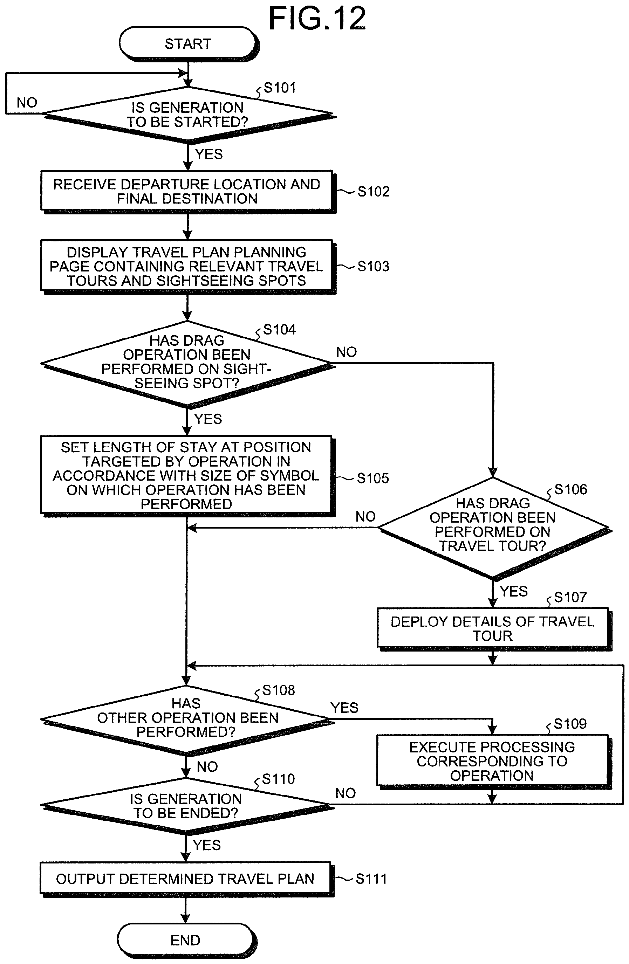

The procedure of the above-described travel schedule generation processing is described next. FIG. 12 is a flowchart illustrating the procedure of travel schedule generation processing. While an example in which a departure location and a final destination are received is described here, sightseeing spots may be received or sightseeing spots, a departure location, and a final destination may be received as described above.

As illustrated in FIG. 12, upon receiving a generation start request (Yes at S101), the request receiving unit 14 receives a departure location and a final destination (S102). Subsequently, the request receiving unit 14 displays a travel plan planning page containing travel tours and sightseeing spots that correspond to the received departure location and final destination (S103).

Thereafter, if a drag operation is performed on a symbol for any of the sightseeing spots (Yes at S104), the spot selecting unit 15 sets the length of stay according to the size of the symbol for the sightseeing spot at a position at which the drag operation is targeted, thereby displaying the symbol at the position (S105).

If a drag operation is not performed on a symbol for any of the sightseeing spots (No at S104) but is performed on a symbol for any of the travel tours (Yes at S106), the package selecting unit 17 displays the details of the travel tour in a travel schedule (S107). If a drag operation is performed but not on a symbol for any of the travel tours (No at S106), processing at S108 is executed.

Thereafter, if any of the spot selecting unit 15, the travel specifying unit 16, the package selecting unit 17 receives another operation (Yes at S108), processing corresponding to the received operation is executed (S109), and the procedure returns to S108.

If the finalization unit 18 receives an ending or finalization operation (Yes at S110) while the spot selecting unit 15, the travel specifying unit 16, the package selecting unit 17 receives no other operation (No at S108), the finalized travel schedule is output (S111). If the finalization unit 18 does not receive the ending or finalization operation (No at S110), the procedure returns to S108 and the subsequent processing is executed.

As described above, the itinerary determining device 10 is capable of providing a screen for easily generating a travel schedule through drag-and-drop operations, the screen having a format that enables the user to easily become conscious about time like one used for a TV schedule. The itinerary determining device 10 is therefore capable of providing an interface through which the user can generate a plan while intuitively grasping how time is used during a travel.

The itinerary determining device 10 allows the user to change settings of the length of stay and the like by performing operations on symbols to which the details of sightseeing spots have been assigned, thereby being capable of providing a user with improved convenience. Providing users with improved convenience can contribute to differentiation from existing travel agencies, and can lead to a higher customer attraction rate.

The itinerary determining device 10 is capable of representing the lengths of stay in proportion to the sizes of symbols, thereby allowing a user to visually grasp a travel schedule. The itinerary determining device 10 is also capable of automatically setting a mode of travel from one symbol to another, so that even a user not familiar with areas to be traveled can be provided with adjustment of a travel schedule without any problem in a schedule of traveling.

### [b] Second Embodiment

While an embodiment of the present invention has been described hereinabove, the present invention may be implemented in various different forms other than the first embodiment.

### [Location Information and Traffic Information]

In the first embodiment, an example in which the itinerary determining device 10 acquires, from external servers, location information included in information on sightseeing spots and modes of travel from sightseeing spots to others. This example, however, is not limiting. For example, the itinerary determining device 10 may be configured to acquire relevant information from an external database storing therein location information, modes of travel, traffic information, distances, and the like.

The itinerary determining device 10 may be configured to have the same functions as those of the above-described external servers implemented thereon and may be configured to have a database stored in the storage unit 12, the database being operable to store therein information previously acquired from the external servers and information stored by an administrator.

### [Events at Sightseeing Spots]

The itinerary determining device 10 is also capable of assisting generation of an itinerary in which special events to be held at sightseeing spots within the opening hours thereof. For example, the sightseeing spot DB 12a further contains information on special events and time slots for which the special events are to be held. Examples of the special events include a time-limited sale and a show that are to be held at certain time slots within the opening hours.

Upon receiving information such as a departure location, a final destination, dates of travel, and sightseeing spots via the web browser or the like, the request receiving unit 14 replies to the user terminal with a travel plan planning page containing information on events to be held at the sightseeing spots. The travel plan planning page presents information on special events to be held at sightseeing spots together with time slots for which the special events are to be held, and contains a preference area in which to enter whether preference is given to special events at sightseeing spots.

If an entry in the preference area indicates that preference is given, the spot selecting unit 15 allows a symbol for the corresponding sightseeing spot to be arranged at a position that includes the time slot for which the event is held.

### [Setting of Length of Stay]

In the first embodiment, an example has been described in which the itinerary determining device 10 automatically sets the length of stay in accordance with a position at which a symbol is set and the size of the symbol. This example, however, is not limiting. For example, the itinerary determining device 10 may further displays a clock time obtained by adding, to a clock time, a period of time corresponding to the length of stay stored in association with a sightseeing spot.

In one example, when the symbol for AA Tree is dragged onto a position of 9:00 with the length of stay at AA Tree previously set to two hours, the itinerary determining device 10 displays, on a travel schedule, notes that the beginning clock time of stay is 9:00 and that the ending clock time of stay is 11:00.

### [Example of Display]

In the first embodiment, an example has been described in which the itinerary determining device 10 changes the orientation of the screen from the vertical orientation to the horizontal orientation. This example, however, is not limiting and the itinerary determining device 1 may changes the orientation of the screen from the horizontal orientation to the vertical orientation. The itinerary determining device 10 may number sightseeing spots contained in a time schedule field in the order of visit.

### [Specification of Positions of Symbols]

In the first embodiment, an example has been described in which the itinerary determining device 10 sets a clock time that corresponds to the position of each symbol. For this setting, the itinerary determining device 10 may be configured to have coordinates specified with respect to each of the clock times within the travel schedule in the area A and specifies the clock times from coordinates corresponding to the position of the symbol that has been dragged.

For example, the itinerary determining device 10 have "9:00" and "(X1,Y4)", "10:00" and "(X1,Y6)", or the like stored as "Clock Time" and "Coordinates (X,Y)" in association with each other. If the position of a symbol arranged is (X1,Y4), the itinerary determining device 10 sets the beginning clock time of stay to 9:00. Each of the coordinates may be configured to have some range.

The itinerary determining device 10 may be configured to fix clock times to be displayed or may be configured to change, in accordance with selection by a user, clock times to be displayed. The itinerary determining device 10 may be configured to, when changing intervals for expressing clock times from three-hour intervals to one-hour intervals, redefine the association between each of the clock times and the coordinates. This manner for specifying positions is merely an example, and various existing manners are applicable therefor.

### [System]

Components of the illustrated device are always physically configured as illustrated in the drawings. That is, the components may be distributed or integrated in units of any desired sets of components. Furthermore, all or any part of the processing functions executed in each device can be implemented in the form of a central processing unit (CPU) and a computer program to be analyzed and executed by the CPU, or can be implemented in the form of hardware based on a wired logic.

In addition, among the processes described in the first and the second embodiments, all or a part of the processes described as being to be automatically executed may be manually executed, or all or a part of the processes described as being to be manually executed may be automatically executed by any known method. Furthermore, unless otherwise noted, it is possible to optionally change the processing procedures, the control procedures, the specific names, and the information including various data and parameters illustrated in this description and in the drawings.

### [Hardware]

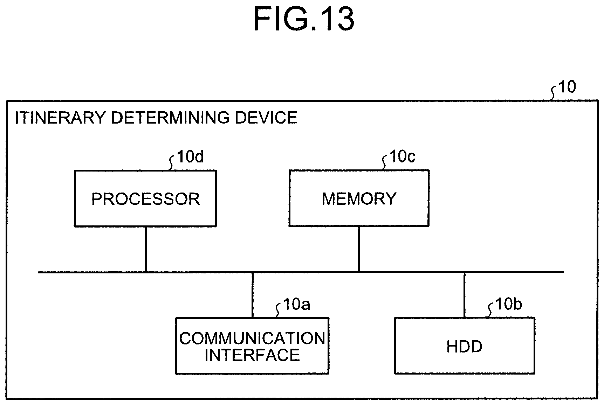

FIG. 13 is a diagram illustrating an example of the hardware configuration. As illustrated in FIG. 13, the itinerary determining device 10 includes a communication interface 10a, a hard disk drive (HDD) 10b, a memory 10c, and a processor 10d. The units illustrated in FIG. 13 are connected to one another via a bus and the like.

The communication interface 10a is an interface operable to control communication with other devices, and is, for example, a network interface card. The HDD 10b stores therein, for example, a computer program that causes the functions illustrated in FIG. 2 and other parts to function, DBs, and tables.

The processor 10d reads out, from the HDD 10b or the like, the computer program operable to execute the same functions as those to be executed by the processing units illustrated in, for example, FIG. 2 and loads the computer program onto the memory 10c, thereby running a process operable to execute the functions described in connection with, for example, FIG. 2.

That is, this process executes the same functions as those to be executed by the respective processing units included in the itinerary determining device 10. specifically, the processor 10d reads out, from the HDD 10b or the like, a computer program having the same functions as those of the processing units such as the request receiving unit 14, the spot selecting unit 15, the travel specifying unit 16, the package selecting unit 17, the finalization unit 18, and the display changing unit 19. The processor 10d then runs a process operable to execute the same processing as the processing units such as the request receiving unit 14, the spot selecting unit 15, the travel specifying unit 16, the package selecting unit 17, the finalization unit 18, and the display changing unit 19.

In this manner, the itinerary determining device 10 function as an information processing device that reads out and executes a computer program to execute an itinerary determination method. The itinerary determining device 10 may be configured to read out the computer program from a recording medium via a medium reading device and execute the read computer program to implement the same functions as those to be provided by each of the first and the second embodiments. The computer program, in other embodiments, is not limited to being executed by the itinerary determining device 10. For example, the present invention is similarly applicable also to an embodiment in which another computer or a server executes the computer program and an embodiment in which another computer and a server execute the computer program in cooperation with each other. Reference Signs List

### [Reference Signs List]

- 10: itinerary determining device
- 11: communication unit
- 12: storage unit
- 12a: sightseeing spot DB
- 12b: travel package DB
- 13: control unit
- 14: request receiving unit
- 15: spot selecting unit
- 16: travel specifying unit
- 17: package selecting unit
- 18: finalization unit
- 19: display changing unit

## Claims

1. An itinerary display program that causes a computer to execute a process comprising:
displaying a list of a plurality of selected sightseeing spots together with images corresponding to the respective sightseeing spots;
allowing one, some, or all of the sightseeing spots displayed in the list to be arranged at any position or positions within a time schedule field representing one day or a plurality of days; and
displaying, in correspondence with the arranged sightseeing spot, a clock time that corresponds to the position to which the sightseeing spot has been arranged.

2. The itinerary display program according to claim 1, wherein the process further includes:
displaying a clock time obtained by adding, to the clock time that corresponds to the arranged position, a time period corresponding to a length of stay that has been stored in association with the sightseeing spot.

3. The itinerary display program according to claim 1, wherein the process further includes:
allowing change of the length of stay by changing a beginning clock time of stay or an ending clock time of stay at the sightseeing spot in accordance with an operation to enlarge or reduce a symbol for the sightseeing spot.

4. The itinerary display program according to claim 1, wherein the process further includes:
displaying, after a first sightseeing spot is arranged, when a second sightseeing spot is arranged as a destination to visit next to the first sightseeing spot, between symbols for the first sightseeing spot and the second sightseeing spot, information indicating a mode of travel or a travel time for traveling from the first sightseeing spot to the second sightseeing spot.

5. The itinerary display program according to claim 1, wherein the process further includes:
when a symbol for the sightseeing spot is arranged at a position not corresponding to opening days and hours of the sightseeing spot, issuing an alert or rejecting the arrangement.

6. The itinerary display program according to claim 1, wherein the process further includes:
when a position at which the sightseeing spot is arranged is a position not corresponding to opening hours of the sightseeing spot, performing control that causes the symbol to be rearranged at a position corresponding to the opening hours of the sightseeing spot.

7. The itinerary display program according to claim 1, wherein the process further includes:
displaying a list of certain sightseeing spots and allowing any sightseeing spot from the list of the certain sightseeing spots to be arranged in the time schedule field representing one day or a plurality of days.

8. The itinerary display program according to claim 1, wherein the process further includes:
allowing a temporal axis of the time schedule field to be set to a vertical orientation or a horizontal orientation.

9. The itinerary display program according to claim 1, wherein the process further includes:
when displaying the time schedule field representing a plurality of days, arranging an itinerary for each of the days in a manner such that the itinerary runs vertically and displaying a plurality of sightseeing spots corresponding to each of the days at corresponding clock times on a temporal axis.

10. The itinerary display program according to claim 1, wherein the process further includes:
numbering sightseeing spots contained in the time schedule field in the order of visit thereto.

11. An itinerary display method comprising:
displaying a list of a plurality of selected sightseeing spots together with images corresponding to the respective sightseeing spots;
allowing one, some, or all of the sightseeing spots displayed in the list to be arranged at any position or positions within a time schedule field representing one day or a plurality of days; and
displaying, in correspondence with the arranged sightseeing spot, a clock time that corresponds to the position to which the sightseeing spot has been arranged.

12. An itinerary display device comprising:
a display control unit configured to display a list of a plurality of selected sightseeing spots together with images corresponding to the respective sightseeing spots;
an arrangement unit configured to allow one, some, or all of the sightseeing spots displayed in the list to be arranged at any position or positions within a time schedule field representing one day or a plurality of days; and
a correspondence display unit configured to display, in correspondence with the arranged sightseeing spot, a clock time that corresponds to the position to which the sightseeing spot has been arranged.
